# EUROPEAN PATENT APPLICATION

(11) **EP 4 599 746 A2**
(43) Date of publication of application: **13.08.2025**
(21) Application number: 25178187.8
(22) Date of filing: 03.03.2020
(51) Int. Cl.: A47L 9/12

(54) **VACUUM CLEANER**

(30) Priority: 04.03.2019 GB 201902894
(62) Divisional of application: 20709305.5
(71) Applicant: NUMATIC INTERNATIONAL LIMITED, Camberley Surrey GU15 3SY (GB)
(72) Inventor: LAWRENCE, Ian, Chard, TA20 2GB (GB); ASTON, Marcus, Chard, TA20 2GB (GB); FORREST, James, Chard, TA20 2GB (GB); BEVIS, Ian, Chard, TA20 2GB (GB)
(74) Representative: Cleveland Scott York

(57) **Abstract**

The present invention concerns the field of vacuum cleaners and, in particular, those which have a filter bag for collecting air entrained detritus. The invention relates especially to a vacuum cleaner which reduces the exposure to the operator of dust and contaminated matter collected during cleaning when replacing the filter bag. The invention provides a vacuum cleaner (100, 200) comprising a suction drive unit (101, 201) in fluid communication with a vacuum chamber (106, 206) for accommodating a filter cartridge (111), the vacuum chamber (106, 206) itself being fed by a fluid inlet port in communication with a nozzle via which air is drawn into the vacuum chamber (106, 206) when the suction drive unit (101, 201) is in operation. The filter cartridge (111, 211) comprises a gas-porous membrane including wall portions which define a filter interior. The cartridge (111, 211) has an airflow inlet at one end through which air-entrained dirt enters the filter (111, 211), with dirt retained in the interior and air passing through the gas-porous membrane. The chamber (106, 206) is provided with an end cap that is configurable between open and closed configurations, so that in the closed configuration the cartridge filter (111, 211), is enclosed and constrained within the vacuum chamber (106, 206) with the cartridge inlet disposed so as to be fed by the fluid inlet port (120, 222), and in the open configuration the constraint is at least partially removed so that the cartridge (111, 211) is free to be removed from the chamber (106, 206) by travel in a removal direction. The vacuum cleaner also has a release latch mechanism provided for the end-cap, operation of which causes the end-cap to be displaced from the closed to the open configuration. The latch mechanism comprises an axially slidable actuation shuttle, travel of which displaces a release latch.

## Description

The present invention concerns the field of vacuum cleaners and, in particular, those which have a filter bag for collecting air entrained detritus. The invention relates especially to a vacuum cleaner which reduces the exposure to the operator of dust and contaminated matter collected during cleaning when replacing the filter bag.

Conventional domestic or commercial vacuum cleaners have a vacuum suction motor for sucking air entrained dirt via a nozzle or aperture which feeds into a collection chamber. An air filter such as a porous bag is provided for separating the dirt from the airflow. Vacuum cleaners may be characterised as upright (in which the collection chamber is attached to an upright, articulate handle portion), or cylinder (in which a drum or canister contains the suction motor and collection chamber, and the chamber is fed by an elongate suction tube with a nozzle at the distal end). Such cylinder machines are available from Numatic International Ltd under the Henry (RTM) trade name. Handheld vacuum cleaners are also available which may be battery or mains powered, but of a size and weight which admits of convenient manual use. These may be provided with a handle or grip and a trigger as on/off actuator.

One problem with vacuum cleaners is that they require emptying, typically by opening a collection chamber to tip the contents into a refuse sack, or by detaching a filter bag from inside the collection chamber. This can be a dirty and inconvenient process, with collected dust and detritus prone to spilling as the bag is detached, sometimes forming dust clouds. In cases in which the collected dust may be contaminated, or in intrinsically harmful, the emptying process may expose an operator to hazardous dust.

The present invention seeks in one or more of its various aspects to facilitate the emptying of dust collected in a vacuum cleaner, especially to limit the escape of dust and reduce the need for manual manipulation and the operator's exposure to dirt and dust.

According to one aspect of the invention there is provided a vacuum cleaner as defined in claim 1.

The generally cylindrical chamber wall portion may have a distal (or nozzle) end which is provided with an aperture which serves as the fluid inlet port.

In another aspect of the invention, the chamber wall portion may be an end-cap of the chamber. The end-cap may be displaced (as hereinbefore described) by opening thereof. The end-cap may be hinged with respect to the chamber so as to be openable by hinged rotation of the end-cap. The end-cap is typically provided at a nozzle-end region of the chamber. The fluid inlet is provided through the end-cap. This inlet may be fed by a hose, or nozzle, brush bar or another suitable means for entraining dirt or liquid in a gas stream.

A release latch mechanism is provided for the end-cap, operation of which causes or permits the end-cap to be displaced from the closed to open configuration. The latch mechanism comprises an axially slidable actuation shuttle, travel of which displaces a release latch. The latch mechanism may include biasing means which acts to urge the end-cap to the open configuration, so that on release the end-cap springs open. The biasing means may be a compression spring. The biasing means may act on the shuttle. The shuttle may act to shift a cam which acts on a hinging portion of the end-cap. A manually operated lever may be provided to actuate the release latch, typically by tilting the lever about a pivot axis.

A vacuum cleaner in accordance with yet another aspect of the invention may be configured and arranged so that in the open configuration the filter cartridge is free to drop-out from the chamber under gravity when the appropriate orientation of the chamber permits.

In a further aspect of the invention the vacuum cleaner may be configured as a hand-held vacuum cleaner having a longitudinal axis, the cleaner comprising at a proximal end region thereof a suction drive in fluid communication with a generally cylindrical vacuum chamber disposed adjacent the suction drive, the vacuum chamber being aligned co-axially with the longitudinal axis, or an axis parallel thereto, a co-axial inlet port for air-entrained dirt being provided through a distal end wall of the vacuum chamber, the port being fed by a nozzle provided at a distal end region of the vacuum cleaner, wherein a pistol grip is provided at the proximal end region, which pistol grip extends in a generally radial direction so as to facilitate manual pointing of the vacuum cleaner chamber and nozzle along the longitudinal axis. The filter cartridge may be located in the vacuum chamber. The cartridge may have a generally cylindrical configuration with an annular distal end which defines an inlet port of the cartridge which opens into the cartridge interior, which inlet port is aligned with the inlet port of the vacuum chamber. The cartridge may have an annular seal (or bead) around the inlet port, which seal acts on an inside face of the end-cap, around the chamber inlet port.

In the present invention the absence of a fluid inlet stub tub, spigot or other male feature which engages and enters the cartridge inlet port facilitates removal of the filter cartridge as it can fall away (or be lifted out) without having to axially disengage the cartridge from any such stub tub (etc.).

A generally annular space may be defined between the generally cylindrical filter cartridge and an inside surface of the generally cylindrical vacuum chamber. The generally annular space may be in fluid communication with the suction drive. This provides an exit path around the cartridge for filtered air passing out of the cartridge filter.

The cartridge may be elongate and disposed in the vacuum coaxial with, or parallel to, the longitudinal axis.

The filter cartridge preferably comprises supporting structure which defines and locates the airflow inlet. This could be an annular plate, or spider member, or another generally planar rigid structure. The supporting structure may be provided at an airflow inlet end of the cartridge. In a preferred arrangement the filter cartridge comprises supporting structure which makes the cartridge self-supporting whereby to define and maintain an internal space in the cartridge. The supporting structure may include a tongue or tab adjacent the airflow inlet, which tongue or tab serves to facilitate grasping or lifting the filter cartridge.

In yet a further aspect of the invention there may be provided a filter cartridge as hereinbefore described. Following is a description, by way of example only and with reference to the figures of the drawings of modes of putting the present invention into effect.

The chamber may be generally cylindrical in form. In the open configuration a chamber wall portion may be displaced to remove the constraint.

In one aspect of the invention the chamber wall portion comprises a generally cylindrical portion. This portion is displaced by translational movement of the cylindrical wall portion in an axial direction. The generally cylindrical wall portion may be mounted for sliding travel along a base plate.

The translational movement is typically to an extent which is beyond a length of the filter cartridge, so that the cartridge may be removed in a radial direction via an aperture created by the movement of the cylindrical wall portion.

In the drawings: -
Figure 1 is a perspective three quarter view of a vacuum cleaner in
   accordance with a first embodiment of the present invention.
Figure 2 is a perspective three quarter view of the vacuum cleaner along with a filter cartridge, the vacuum cleaner being in an open configuration for insertion/removal of the filter cartridge.
Figure 3 is a side view of the open vacuum cleaner from figure 2 with filter cartridge in place.
Figure 4 is a perspective three quarter view of the vacuum cleaner in accordance with a second embodiment of the invention.
Figure 5 is a perspective three quarter view of the vacuum cleaner of figure 4, the vacuum cleaner being in an open configuration with a filter cartridge outside.
Figure 6 is a side view of the vacuum cleaner of the second embodiment with an open configuration designated by ghost (dashed) lines.

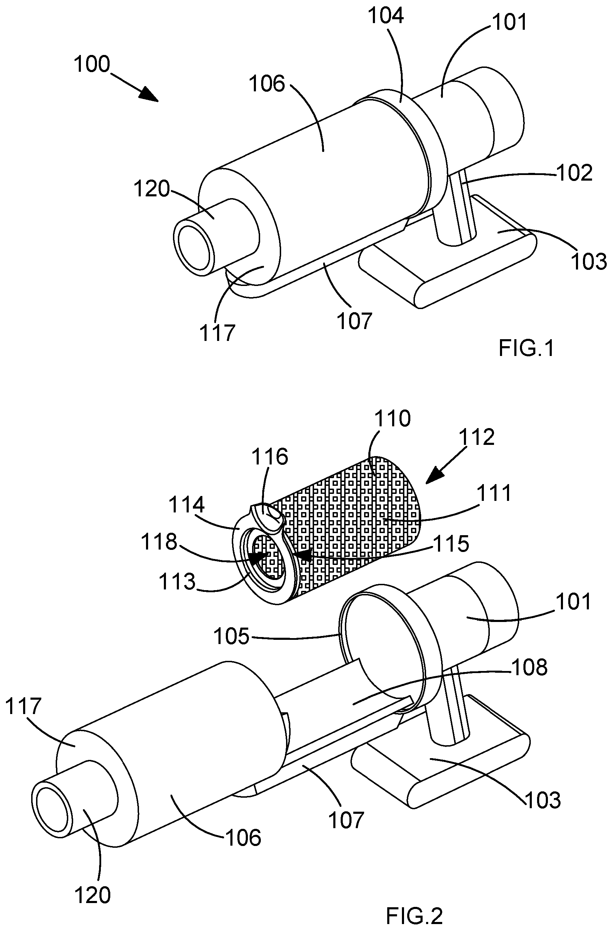

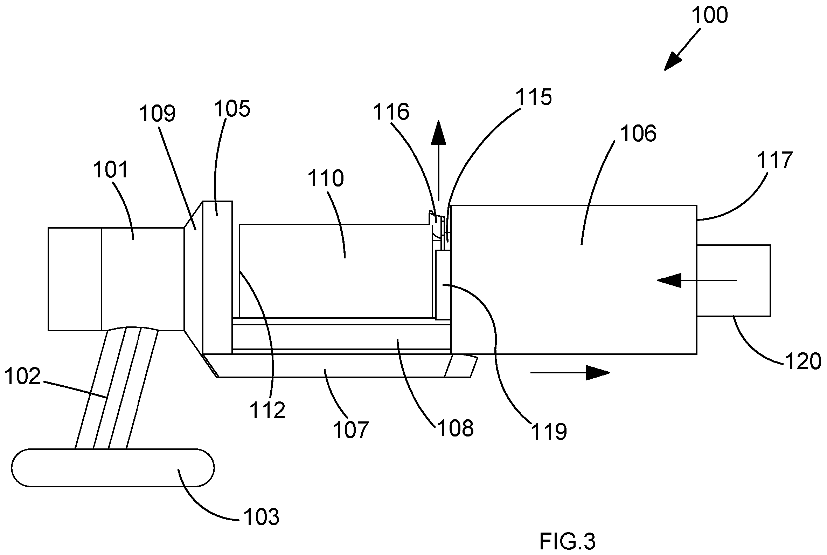

A first hand-held vacuum cleaner is shown generally as 100 in figure 1. The cleaner includes a cylindrical motor and suction fan housing 101. Depending from a wall of the fan housing is a'pistol' hand grip 102, best seen in figure 3. Attached to a distal end of the grip is a battery pack 103 which includes multiple rechargeable cells (not visible), such as Li-ion cells. The battery pack has a generally planar configuration with curved front and rear walls, and flat vertical side cheeks, as shown in figure 1.

A cylindrical base cap 104 is attached to a front end of the fan housing 101. The base cap includes a circumferential lip 105 shown in figure 2, and a frusto-conical tapered region 109 which joins the fan housing front end (see figure 3). This cap defines a region that is in fluid communication with the internal fan in the fan housing 101 , although the internal port and fan are not shown for the sake of simplicity and clarity. The lip 105 and cap provide a seat in which is accommodated a cylindrical vacuum chamber housing 106, shown in figure 1. The chamber is coaxial with the motor and suction fan housing and the base cap. A curved support tray 107 is provided extending as a strut in an axial direction from a lower region of the base cap 104. This tray supports the chamber housing 106, whilst permitting the chamber housing to slide axially between the closed configuration shown in figure 1 and the open configuration shown in figure 2 and in which the chamber housing is displaced in a forward direction. The interior of the chamber housing is provided with further curved support tray 108. The further tray 108 has a curve co-axial with the chamber housing, but with a reduced radius so that the tray sits within the circumference of the chamber housing, at a lower region thereof, as shown in figure 2. This further tray supports and locates a filter cartridge (pod) 1 10 when inserted into the vacuum chamber housing (as shown in figure 3.

The filter cartridge has a cylindrical body portion 1 1 1 , formed of a porous filter membrane (such as a HEPA filter), and a disc-shaped end-cap 1 12, also formed of the filter membrane, which may be attached by a glued seam, or weld or moulded to as a unitary component with the body portion. A front end of the filter cartridge has an annular collar 113 which provides an annular face plate 1 14. The collar is formed with a waist region 1 15 which defines an annular recess behind the face plate. The collar is also provided with an integrally moulded, radially inset, thumb grip 1 16, which facilitates removal of the filter pod from an open vacuum cleaner. The collar is formed of rubberised plastics material which provide sufficient rigidity to support the filter shape, but which forms an air seal when the annular face plate 1 14 abuts an inside surface of the front wall 1 17 of the vacuum chamber housing. The collar 1 13 defines an opening 1 18 into the interior of the cartridge (see figure 2).

A front-end region of the vacuum chamber housing is formed with a co-axial stub tube 120. The stub tube serves as an air inlet port from a nozzle or hose (neither shown) of the vacuum cleaner. The inlet port feeds into the interior of the vacuum chamber. When the vacuum cleaner is loaded with a cartridge the collar is located as a sliding fit in a U-form retainer member 1 19. The retainer has an inward facing lip (not visible) which is received by the waist region 1 15 of the collar. In this way the collar is held in alignment with the stub tube and end wall 1 17 of the vacuum chamber so that the stub tube feeds directly into to the circular opening 1 18 of the cartridge filter. An annular region is provided around the outside of the filter cartridge in the gap between the vacuum chamber inside wall. This is in air communication with the suction fan via the interior of the base cap 104. In use, this induces air to flow through the stub tube, into the filter interior and past the filter membrane into the suction fan.

When the filter cartridge is full, or a cleaning task is complete, the vacuum chamber may be slid forwards to the open configuration, as shown in arrow 1 in figure 2, and the thumb grip pulled so that the collar is disengaged with the U-form retainer member 1 19, in the direction of the vertical arrow 2 in figure 3. The cartridge may then be disposed of a new cartridge inserted. Because the body of the filter cartridge is not gripped during removal, there is no tendency for air and dirt (or collected matter) to puff out of the filter.

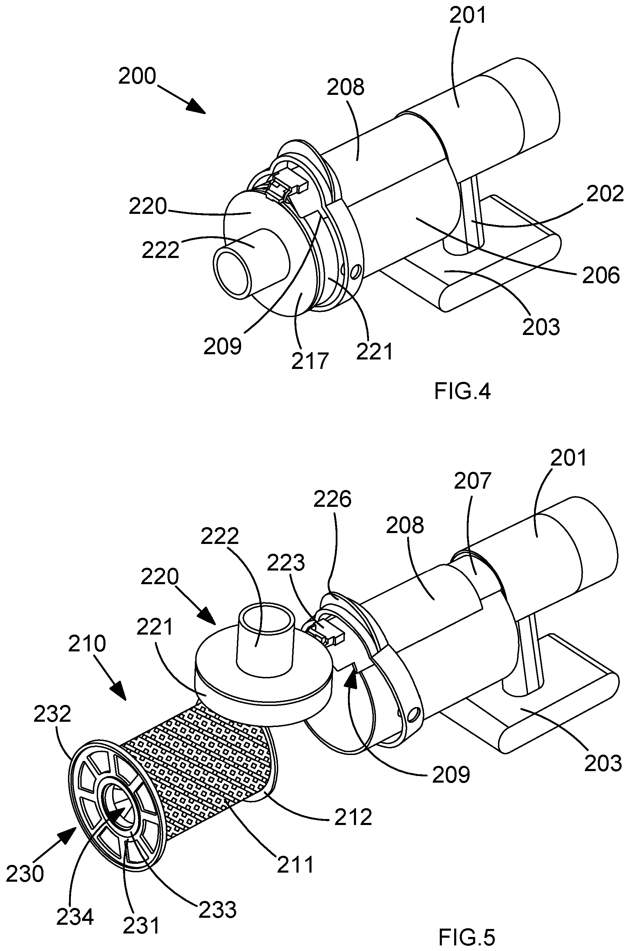

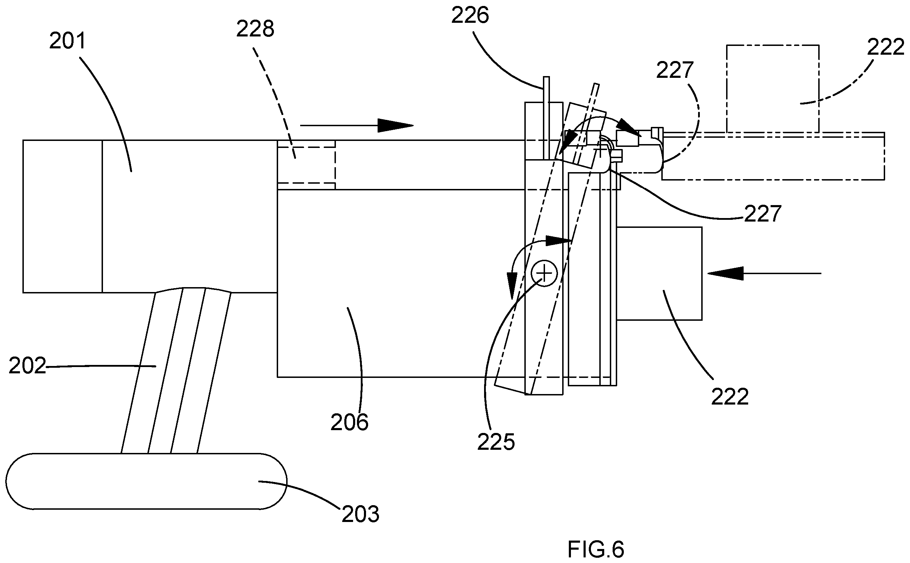

A second hand-held vacuum cleaner in accordance with the invention is shown generally as 200 in figure 4. The cleaner includes a cylindrical motor and suction fan housing 201. Depending from a wall of the fan housing is a 'pistol' hand grip 202, best seen in figure 6. Attached to a distal end of the grip is a battery pack 203 which includes multiple rechargeable cells (not visible), such as Li-ion cells. The battery pack has a generally planar configuration with curved front and rear walls, and flat vertical side cheeks, as shown in figure 4. A cylindrical vacuum chamber housing 206, shown in figure 4, is attached to a front-end region of the fan housing 201. The axis of the chamber is aligned parallel but offset from the axis of the motor and suction fan housing. The chamber interior is in gas communication with the suction fan via internal ducting (not shown) so as to be capable of maintaining a reduced pressure in the chamber. An upper region of the chamber housing is provided with an elongate cheek piece 207 having a curved convex outer surface. A sliding elongate shuttle member 208, also having a curved convex upper surface is slidably attached to the cheek piece so as to permit translational movement of the shuttle member forwards and backwards (in an axial direction). A front-end region of the shuttle member is provided with a cut-out shoulder region 209, which accommodates a circumferential, cylindrical sidewall 221 of an end-cap 220 of the vacuum chamber housing.

The end-cap is formed with a central stub tube 222 which is coaxial with the vacuum chamber sidewalls. An upper region of the end-cap sidewall 221 is attached to an upper surface of the shuttle member by a hinge 223. Thus, the end-cap 220 may be rotated from a closed position (solid lines) to an open position (ghost lines), as shown in figure 6. A hoop 224 surrounds the vacuum chamber housing and is attached to the housing sidewall at opposing diametrically aligned pivots 225. An upper region of the hoop is provided with a convex upstanding fin 226. The hoop with fin serves as an actuation lever by which an operator may open the end-cap for removal or re-loading of a filter cartridge 210 (shown in figure 5). In operation the lever is pushed forwards manually by gripping the fin 226. This shifts the shuttle member and end-cap forwards. Once the end-cap sidewalls have been shifted beyond the distal end of the vacuum chamber housing (as shown in figures 5 and 6) the end-Ocap is free to rotate (90 degrees) up to the open position. The end-cap is urged into the open position and held there by the camming surface of a front nub 227 of the shuttle member. The compression spring 228 urges the shuttle member and nub 227 to the open position.

The filter cartridge has a cylindrical body portion 21 1 , formed of a porous filter membrane (such as a HEPA filter), and a disc-shaped end piece 212, also formed of the filter membrane, which may be attached to the body portion by a glued seam, or weld or moulded to as a unitary component with the body portion. A front end of the filter cartridge is provided with a rigid spider member 230. The spider member has eight equi-spaced spokes extending from a centrally located collar region 231. An annular web of filter material is attached to the spokes and supported by them. The arms extend to an annular circumferential rim 232. The outside face of the rim is provided with a circular seal. A circular central seal 233 is also provided on the face of the collar region 231. The collar region defines a central opening 234 into the interior of the filter cartridge. The spider member is formed of plastics material which provides sufficient rigidity to support the filter shape, but which is rigid enough to maintain an air seal when the annular spider member abuts an inside surface of the front wall 217 of the end-cap 220.

In the closed end-cap position, the stub tube 222 serves as an air inlet port from a nozzle or hose (neither shown) of the vacuum cleaner. The inlet port feeds into the interior of the vacuum chamber housing 206. When the vacuum cleaner is loaded with a cartridge the inlet port feeds into the cartridge interior via the opening 234. An annular region is provided around the outside of the filter cartridge in the gap between the vacuum chamber inside wall. This region is in air communication with the suction fan in the fan housing. In use, this induces air to flow through the stub tube, into the filter interior and past the filter membrane into the suction fan.

When the filter cartridge is full, or a cleaning task is complete, the hoop may be tilted forwards using the fin 226. The end-cap is released and displaced so as to provide clearance for the filter cartridge to drop out in an axial direction, when the cleaner is pointed down. In this way the filter cartridge may be removed without touching the dirty filter membrane of the cartridge. This prevent contamination and the need to hold the cartridge. Because the body of the filter cartridge is not gripped during removal, there is no tendency for air and dirt (or collected matter) to puff out of the filter. When a new filter is inserted, and the end-cap is closed, the end-cap holds the filter rim 232 securely against the vacuum chamber free end. The present invention as set out and defined in the claims hereinafter provides vacuum cleaners in which operator contamination is far less likely during the filter bag/cartridge removal process. The present invention concerns the field of vacuum cleaners and, in particular, those which have a filter bag for collecting air entrained detritus. The invention relates especially to a vacuum cleaner which reduces the exposure to the operator of dust and contaminated matter collected during cleaning when replacing the filter bag.

The invention provides a vacuum cleaner comprising a suction drive unit in fluid communication with a vacuum chamber for accommodating a filter cartridge, the vacuum chamber itself being fed by a fluid inlet port in communication with a nozzle via which air is drawn into the vacuum chamber when the suction drive unit is in operation, wherein the filter cartridge comprises a gas-porous membrane including wall portions which define a filter interior, the cartridge having an airflow inlet at one end through which air-entrained dirt enters the filter, with dirt retained in the interior and air passing through the gas-porous membrane, wherein the chamber is configurable between open and closed configurations, so that in the closed configuration the cartridge filter is enclosed and constrained within the vacuum chamber with the cartridge inlet disposed so as to be fed by the fluid inlet port, and in the open configuration the constraint is at least partially removed so that the cartridge is free to be removed from the chamber by travel in a removal direction.

## Claims

1. A vacuum cleaner (100, 200) comprising a suction drive unit (101, 201) in fluid communication with a vacuum chamber (106, 206) for accommodating a filter cartridge (111, 211), the vacuum chamber (106, 206) itself being fed by a fluid inlet port in communication with a nozzle via which air is drawn into the vacuum chamber (106, 206) when the suction drive unit (101, 201) is in operation,
wherein the filter cartridge (111, 211) comprises a gas-porous membrane including wall portions which define a filter interior, the cartridge (111, 211) having an airflow inlet at one end through which air-entrained dirt enters the filter (111, 211), with dirt retained in the interior and air passing through the gas-porous membrane,
wherein the chamber (106, 206) is provided with an end cap that is configurable between open and closed configurations, so that in the closed configuration the cartridge filter (111, 211), is enclosed and constrained within the vacuum chamber (106, 206) with the cartridge inlet disposed so as to be fed by the fluid inlet port (120, 222), and in the open configuration the constraint is at least partially removed so that the cartridge (111, 211) is free to be removed from the chamber (106, 206) by travel in a removal direction
and **characterised in that** a release latch mechanism is provided for the end-cap, operation of which causes the end-cap to be displaced from the closed to the open configuration, wherein the latch mechanism comprises an axially slidable actuation shuttle, travel of which displaces a release latch.

2. A vacuum cleaner (100, 200) as claimed in claim 1, wherein the generally cylindrical chamber wall portion has a nozzle end which is provided with an aperture which serves as the fluid inlet port (120, 222).

3. A vacuum cleaner (100, 200) as claimed in claim 1 or claim 2, wherein the chamber wall portion is an end-cap of the chamber (106, 206) and the end-cap is displaced by opening thereof.

4. A vacuum cleaner (100, 200) as claimed in claim 3, wherein the end-cap is hinged with respect to the chamber (106, 206) so as to be openable by hinged rotation.

5. A vacuum cleaner (100, 200) as claimed in claim 3 or claim 4, wherein the end-cap is provided at a nozzle-end region of the chamber (106, 206).

6. A vacuum cleaner (100, 200) as claimed in claim 5, wherein the fluid inlet is provided through the end-cap.

7. A vacuum cleaner (100, 200) as claimed in any preceding claim, wherein the latch mechanism includes biasing means which acts to urge the end-cap to the open configuration, so that on release the end-cap springs open.

8. A vacuum cleaner (100, 200) as claimed in any preceding claim, configured and arranged so that in the open configuration the cartridge (111, 211) is free to drop-out from the chamber (106, 206) under gravity when the orientation of the chamber permits.

9. A vacuum cleaner (100, 200) as claimed in any preceding claim, which is configured as a hand-held vacuum cleaner having a longitudinal axis, the cleaner (100, 200) comprising at a proximal end region thereof a suction drive in fluid communication with a generally cylindrical vacuum chamber (106, 206) disposed adjacent the suction drive, the vacuum chamber being aligned co-axially with the longitudinal axis, or an axis parallel thereto, a co-axial inlet port for air- entrained dirt being provided through a distal end wall of the vacuum chamber (106, 206), the port being fed by a nozzle provided at a distal end region of the vacuum cleaner (100, 200), wherein a pistol grip is provided at the proximal end region, which pistol grip extends in a generally radial direction so as to facilitate manual pointing of the vacuum cleaner chamber (106, 206) and nozzle along the longitudinal axis.

10. A vacuum cleaner (100, 200) as claimed in any preceding claim, wherein the filter cartridge (111, 211) is located in the vacuum chamber (106, 206) and has a generally cylindrical configuration with an annular distal end which defines an inlet port of the cartridge which opens into the cartridge interior, which inlet port is aligned with the inlet port of the vacuum chamber (106, 206).

11. A vacuum cleaner (100, 200) as claimed in any preceding claim, wherein a generally annular space is defined between the generally cylindrical filter cartridge (111, 211) and an inside surface of the generally cylindrical vacuum chamber (106, 206), the generally annular space being in fluid communication with the suction drive and providing an exit path for filtered air passing out of the cartridge filter (111, 211).

12. A vacuum cleaner (100, 200) as claimed in claim 11, wherein the cartridge (111, 211) is elongate and disposed in the vacuum coaxial with, or parallel to, the longitudinal axis and wherein the filter cartridge (111, 211) comprises a supporting structure which defines and locates the airflow inlet.

13. A vacuum cleaner (100, 200) as claimed in claim 12, wherein the supporting structure comprises a rigid structure which is provided at an airflow inlet end of the cartridge (111, 211).

14. A vacuum cleaner (100, 200) as claimed in any preceding claim, wherein the filter cartridge (111, 211) comprises a supporting structure to make the cartridge self-supporting so to define and maintain an internal space in the cartridge.

15. A vacuum cleaner (100, 200) as claimed in any one of claims 12 to 14, wherein the supporting structure includes a tongue or tab adjacent the airflow inlet, which tongue or tab serves to facilitate grasping or lifting the filter cartridge (111, 211).
